# EUROPEAN PATENT APPLICATION

(11) **EP 2 448 301 A1**
(43) Date of publication of application: **02.05.2012**
(21) Application number: 11187063.0
(22) Date of filing: 28.10.2011
(51) Int. Cl.: H04W 8/18, H04W 8/20, H04L 29/06, H04W 12/06

(54) **Methods and apparatus for access control client assisted roaming**

(30) Priority: 17.05.2011 US 109851; 28.10.2010 US 407858 P
(71) Applicant: Apple Inc., Cupertino, CA 95014 (US)
(72) Inventor: Schell, Stephan V., Cupertino, CA 95014 (US); Haggerty, David T., Cupertino, CA 95014 (US)
(74) Representative: Rooney, John-Paul

(57) **Abstract**

Methods and apparatus that allow a device to migrate wireless service across multiple wireless networks. In one exemplary embodiment, the present invention enables storing and switching between multiple Electronic Subscriber Identity Modules (eSIM), where each eSIM is specific to a different carrier network. By loading the appropriate eSIM, the user device can authenticate itself with the selected carrier, rather than roaming. During roaming operation, the user equipment can load one or more of the previously stored eSIMs. Selection of the eSIM can be done manually by the user or can be driven by the user equipment based on desired context; for example, based on carrier signal strength, cost-effectiveness, etc. Support for multiple radio technologies also allows universal connectivity for wireless devices, even spanning previously incompatible technologies such as GSM (Global Standard for Mobile Communications), CDMA (Code Division Multiple Access), etc.

## Description

### Background of the Invention

### 1. Field of Invention

The present invention relates generally to the field of wireless systems such as cellular networks and, more particularly, to systems that allow a device to migrate wireless service across multiple wireless networks.

### 2. Description of Related Technology

Many wireless systems or networks require user identification and authentication in order to access services. For example, within the context of an exemplary Universal Mobile Telecommunications System (UMTS) cellular system, cellular phone access control is governed by an access control client, referred to as a Subscriber Identity Module (SIM) which is physically embodied within a physical card form factor Universal Integrated Circuit Card (UICC). During operation, the SIM card authenticates the subscriber to the cellular network. After successful authentication, the subscriber is allowed access to the cellular network.

When a SIM card is manufactured, the SIM card is programmed with carrier specific authentication information that restricts the use of that SIM card to a particular carrier. Furthermore, each SIM card is associated with a single user account, where the user account data is permanently stored on the SIM card. If a user wishes to change services from an existing account to a new account, or an existing carrier to a new carrier, the user needs a new SIM card. In short, the user account and carrier network is tied to the SIM card, and not the mobile device itself. The mobile device is somewhat of a fungible commodity in this regard.

Unfortunately, when a subscriber travels to a new service area, the subscriber must often choose between paying high "roaming" fees, or purchasing a new SIM card. Roaming service refers mobile device connectivity in a location that is different from the home location where the mobile device was registered. In comparison to registered subscriber services, roaming service may have reduced signal quality and/or extra expense associated therewith. However, in more extreme cases, the subscriber may not even have roaming capabilities; accordingly, the mobile device must purchase an entirely new SIM card to register with the visited network, or forgo connectivity altogether.

Accordingly, improved solutions are required for providing users with the ability to obtain (e.g., purchase) and manage coverage while a device is outside of its home location. Such improved solutions should ideally support delivery of a new or different user account to previously deployed or purchased devices, without also requiring a new SIM card.

### Summary of the Invention

The present invention addresses the foregoing needs by disclosing, *inter alia,* apparatus and methods for selecting and utilizing access clients for use on a user device.

Methods and apparatus that allow a device to migrate wireless service across multiple wireless networks. In one exemplary embodiment, the present invention enables storing and switching between multiple Electronic Subscriber Identity Modules (eSIM), where each eSIM is specific to a different carrier network. By loading the appropriate eSIM, the user device can authenticate itself with the selected carrier, rather than roaming. During roaming operation, the user equipment can load one or more of the previously stored eSIMs. Selection of the eSIM can be done manually by the user or can be driven by the user equipment based on desired context; for example, based on carrier signal strength, cost-effectiveness, etc. Support for multiple radio technologies also allows universal connectivity for wireless devices, even spanning previously incompatible technologies such as GSM (Global Standard for Mobile Communications), CDMA (Code Division Multiple Access), etc.

In a first aspect of the invention, wireless apparatus is disclosed. In one embodiment, the apparatus includes: one or more wireless interfaces, the one or more wireless interfaces adapted to connect to one or more wireless networks; a secure element, wherein the secure element is adapted to store a plurality of user access data elements, each user access data element being associated with a corresponding network; a processor; and a storage device in data communication with the processor, the storage device comprising computer-executable instructions. The instructions are in one variant configured to, when executed by the processor: select an available network; retrieve from the secure element a first user access data element associated with the selected network; load the retrieved user access data; and authenticate to the selected network with the loaded user access data.

In a second aspect of the invention, a method for migrating wireless access across multiple networks is disclosed. In one embodiment, the method includes: detecting a roaming condition, and evaluating one or more access control clients, wherein each access control client is associated with one or more networks; selecting an available access control client; loading the selected access control client; and executing the selected access control client.

In one variant, the method is performed substantially by a user device. In another variant, the method is performed substantially by a network entity. In yet other variants, the various tasks of the method are shared by the user device and one or more network entities.

In a third aspect of the invention, a network apparatus is disclosed. In one embodiment, the apparatus is configured to cause detection of a condition requiring changeout of an access client (e.g., eSIM), such as for example a roaming condition or loss of signal quality/strength, and invoke subsequent change or handover of the user device from one network or carrier to another.

In a fourth aspect of the invention, a system is disclosed. In one embodiment, the system includes a wireless network and a user device that can selectively choose and activate different access clients based on prevailing conditions within the network (e.g., the user roaming from the network, signal quality or strength, etc.)

In a fifth aspect, a computer readable apparatus is disclosed. In one embodiment, the apparatus includes a storage medium with at least one computer program disposed thereon. The at least one program is configured to, when executed, detect a roaming or other triggering condition; select at least one second network for access; invoke access to the selected network; and terminate access to the current network in use.

In a sixth aspect of the invention, base station apparatus is disclosed. In one embodiment, the base station apparatus is configured to support at least a first wireless network, and facilitate a wireless device transfer to a different base station apparatus adapted to support a different wireless network than the first network. In one variant, the base station apparatus includes: one or more wireless interfaces; a processor; and a storage device in data communication with the processor, the storage device comprising computer-executable instructions that are configured to, when executed by the processor: receive operational information from the wireless device; determine if the different base station apparatus is available for use by the wireless device, the determination being based at least in part on the operational information; and transmit a command to the wireless device, the command causing the wireless device to connect to the different base station.

These and other aspects of the invention shall become apparent when considered in light of the disclosure provided herein.

### Brief Description of the Drawings

FIG. 1 graphically illustrates one exemplary Authentication and Key Agreement (AKA) procedure using a prior art USIM.
FIG. 2 is a logical flow diagram illustrating one exemplary cellular system, useful in conjunction with various embodiments of the present invention.
FIG. 3 graphically illustrates an exemplary transaction for migrating a cellular device from a first carrier network to a second carrier network, according to one embodiment of the invention.
FIG. 4 is a logical flow diagram illustrating one embodiment of a generalized method for migrating cellular device service, in accordance with the present invention.
FIG. 5 is a block diagram of an exemplary user apparatus useful for implementing the methods of the present invention.
FIG. 6 is a block diagram of an exemplary network apparatus useful for implementing the methods of the present invention.

All Figures © Copyright 2010 Apple Inc. All rights reserved.

### Detailed Description of the Invention

Reference is now made to the drawings, wherein like numerals refer to like parts throughout.

### Overview

In one aspect, the present invention is directed to methods and apparatus that allow user equipment access to different carriers by providing support for roaming coverage outside of a "home" location. Embodiments of the invention are adapted to switch between multiple access clients (e.g., Electronic Subscriber Identity Modules or eSIMs) stored on a mobile device, where each eSIM contains a SIM configured to authenticate the mobile device with a carrier network. Specifically, in one exemplary embodiment, a mobile device detects a roaming condition, and responsively (or anticipatorily) evaluates its available eSIMs. If at least one eSIM is suitable for non-roaming operation with the current network, then the eSIM is loaded and the mobile device registers in its new home network.

More generally, the present invention relates to a wireless device that can change its current access control client to match the current network, rather than using existing roaming access. For example, rather than keeping the eSIM associated with the first network active and roaming in the second network (and hence in some cases generating extra roaming charges), the mobile device deactivates its eSIM associated with the first network, and concurrently or anticipatorily loads the eSIM associated with the second network. This "handoff" is in the exemplary embodiment performed seamlessly so that the user experience is not affected (i.e., "on the fly").

Various aspects of the present invention substantially improve both quality and efficiency of service, as well as service coverage. By flexibly changing between multiple access control clients, users may maintain multiple service contracts for different network service providers on a single device. Such a feature adds value to a user, as they may roam from their domestic service area (e.g. in the case of foreign travel) by purchasing user access data with a service provider in the foreign network service area. Additionally, because the user access data format is not restricted to particular physical card (e.g. UICC, R-UIM card, etc.), a user device enabled with multiple wireless interfaces (e.g., GSM, CDMA, etc.) may enhance service coverage by allowing a user to switch between different RANs with varying signal strength.

### Detailed Description of Exemplary Embodiments

Exemplary embodiments of the present invention are now described in detail. While these embodiments are primarily discussed in the context of Subscriber Identity Modules (SIMs) of a GSM, GPRS/EDGE, UMTS cellular network, it will be recognized by those of ordinary skill that the present invention is not so limited. In fact, the various aspects of the invention are useful in any wireless network (whether cellular or otherwise) that can benefit from access control client assisted roaming.

It will also be recognized that while the term "subscriber identity module" is used herein (e.g., eSIM), this term in no way necessarily connotes or requires either (i) use by a subscriber *per se* (i.e., the invention may be practiced by a subscriber or non-subscriber); (ii) identity of a single individual (i.e., the invention may be practiced on behalf of a group of individuals such as a family, or intangible or fictitious entity such as an enterprise); or (iii) any tangible "module" equipment or hardware.

### Prior Art Subscriber Identity Module (SIM) Operation -

Within the context of the exemplary prior art UMTS cellular networks, a user equipment (UE) includes a mobile device and a Universal Subscriber Identity Module (USIM). The USIM is a logical software entity that is stored and executed from a physical Universal Integrated Circuit Card (UICC). A variety of information is stored in the USIM such as subscriber information, as well as the keys and algorithms used for authentication with the network operator in order to obtain wireless network services.

Generally, UICCs are programmed with a USIM prior to subscriber distribution; the pre-programming or "personalization" is specific to each network operator. For example, before deployment, the USIM is associated with an International Mobile Subscriber Identify (IMSI), a unique Integrated Circuit Card Identifier (ICC-ID) and a specific authentication key (K). The network operator stores the association in a registry contained within the network's Authentication Center (AuC). After personalization the UICC can be distributed to subscribers.

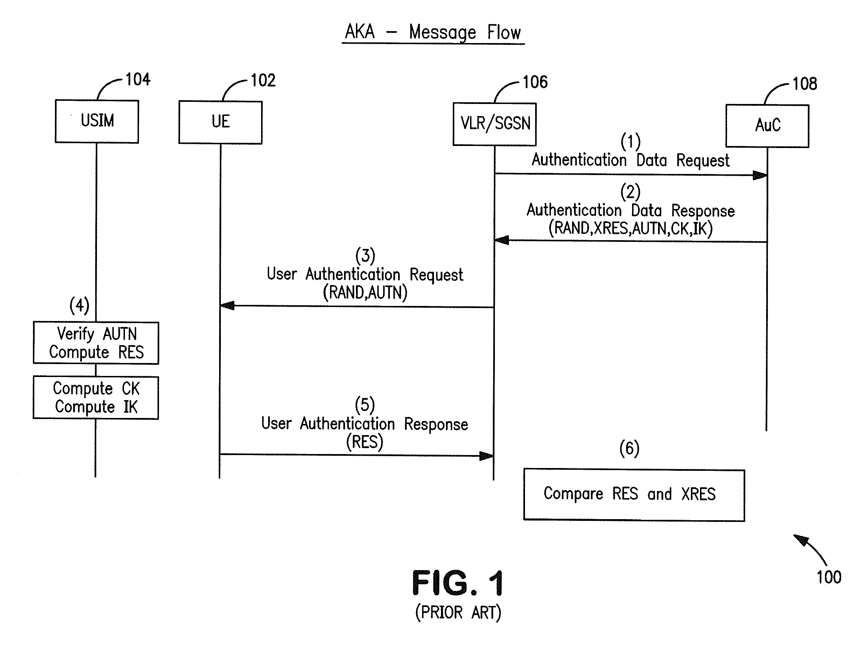

Referring now to FIG. 1, one exemplary Authentication and Key Agreement (AKA) procedure 100 using the aforementioned prior art USIM is illustrated in detail. During normal authentication procedures, the UE 102 acquires the International Mobile Subscriber Identifier (IMSI) from the USIM 104. The UE passes it to the Serving Network (SN) 106 of the network operator or the visited core network. The SN forwards the authentication request to the AuC of the Home Network (HN). The HN compares the received IMSI with the AuC's registry and obtains the appropriate K. The HN generates a random number (RAND) and signs it with K using an algorithm to create the expected response (XRES). The HN further generates a Cipher Key (CK) and an Integrity Key (IK) for use in cipher and integrity protection as well as an Authentication Token (AUTN) using various algorithms. The HN sends an authentication vector, consisting of the RAND, XRES, CK, and AUTN to the SN. The SN stores the authentication vector only for use in a one-time authentication process. The SN passes the RAND and AUTN to the UE.

Once the UE 102 receives the RAND and AUTN, the USIM 104 verifies if the received AUTN is valid. If so, the UE uses the received RAND to compute its own response (RES) using the stored K and the same algorithm that generated the XRES. The UE passes the RES back to the SN. The SN 106 compares the XRES to the received RES and if they match, the SN authorizes the UE to use the operator's wireless network services.

### Example Operation -

In the context of the exemplary embodiment of the present invention, instead of using a physical UICC as in the prior art, the UICC is emulated as a virtual or electronic entity such as e.g., a software application, hereafter referred to as an Electronic Universal Integrated Circuit Card (eUICC), that is contained within a secure element (e.g., secure microprocessor or storage device) in the UE. The eUICC is capable of storing and managing multiple USIM elements, referred hereafter as Electronic Subscriber Identity Modules (eSIM). Each eSIM contains the same logical entity as a typical USIM. The eUICC selects an eSIM based upon the eSIM's ICC-ID. Once the eUICC selects the desired eSIM(s), the UE can initiate an authentication procedure to obtain wireless network services from the eSIM's corresponding network operator.

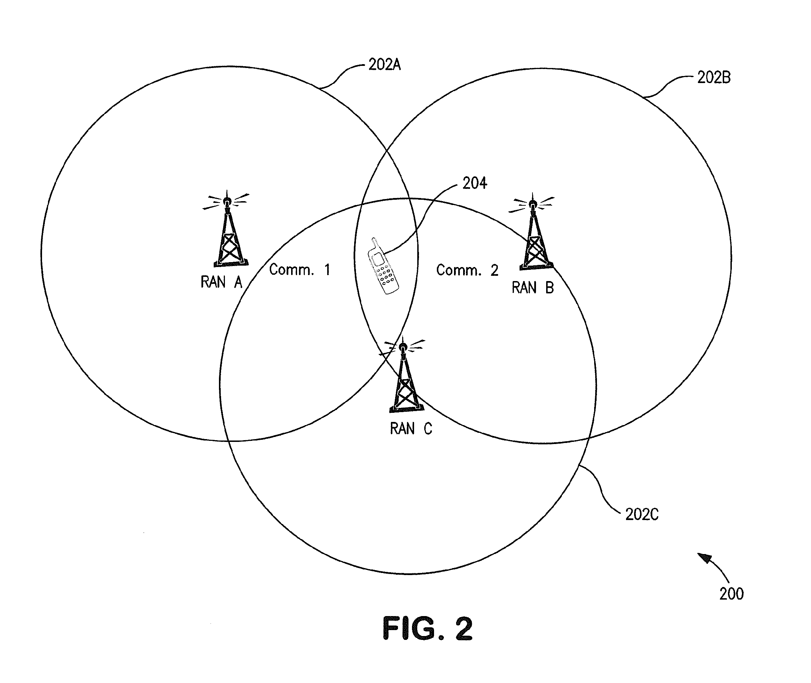

Referring now to FIG. 2, one exemplary cellular system 200 is illustrated, useful for describing various embodiments of the present invention. The exemplary cellular system includes three (3) Public Land Mobile Networks (PLMNs) or "network carriers": UMTS Carrier A 202A, UMTS Carrier B 202B, and CDMA2000 Carrier C 202C. While two UMTS and one CDMA carrier are shown, it will be recognized that other types and numbers of air interfaces (cellular or otherwise) may be used consistent with the invention. Moreoever, the invention contemplates that heterogeneous network types may be involved; e.g., transfer of service or even a call or session in progress from a WLAN to a cellular or WiMAX network, etc.

As shown in FIG. 2, a cellular device 204 is connected to the UMTS Carrier A network, while in coverage of the other two (2) networks. In this example, the cellular device is permanently registered with the UMTS Carrier A network, thus the UMTS Carrier A network is the cellular device's "home network". In the event the cellular device receives service from the UMTS Carrier B network, the second network is a "visited network" as the cellular device is not permanently registered with Carrier B. The CDMA2000 Carrier C network may or may not be supported for roaming access; roaming between different technology types (e.g., UMTS, CDMA2000) is implementation specific; e.g., through use of a dual-mode phone.

Accordingly, in one exemplary embodiment of the present invention, the mobile device 204 changes its current eSIM personality instead of roaming. Specifically, the mobile device has multiple eSIM personalities stored within a secure eUICC (or obtained on-the-fly). Rather than keeping the eSIM associated with the first network active and roaming in the second network, the mobile device deactivates its eSIM associated with the first network 202A, and loads the eSIM associated with the second network 202C (in this case Carrier C). Thereafter, the mobile device connects to the second network as its new home network. As previously noted, this may happen in any number of different sequences, in the exemplary embodiment so as to make the transition as seamless as possible to the user. Hence, the invention contemplates various models, including a "make before break" paradigm wherein service is at least partly initiated with the "new" home Carrier before the eSIM for the previous home Carrier is deactivated or torn down. In another model, a "break before make" logic is used.

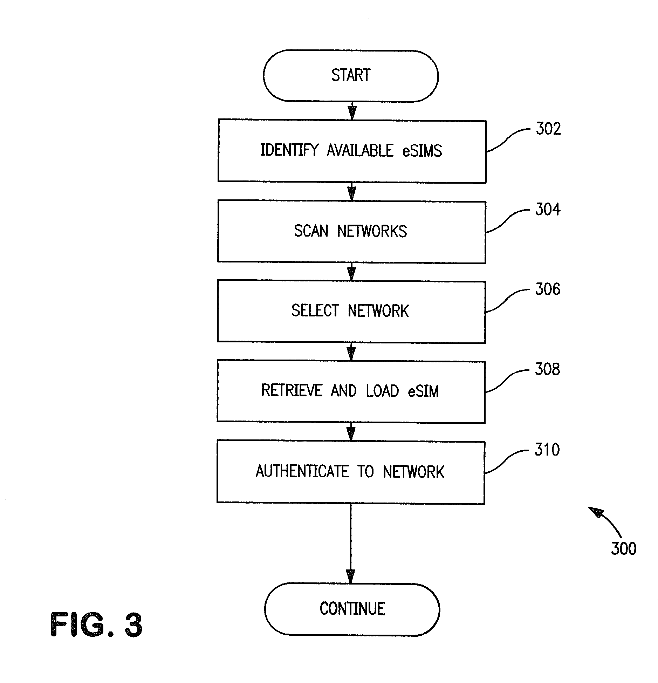

Referring now to FIG. 3, one exemplary method for receiving service across multiple cellular networks is presented. At step 302, a user equipment (UE) identifies its manifest of available eSIMs. As used in the present context, the term "available" may include without limitation access clients or eSIMs that are presently available or conditionally available (e.g., at a future time, upon the occurrence of an event such as coming in range of another base station, etc.). At step 304, the UE scans for the networks corresponding to the available eSIMs. For example, in the exemplary cellular system 200, the UE 204 identifies three (3) network carriers: (i) UMTS Carrier A 202A, UMTS Carrier B 202B, and CDMA2000 Carrier C 202C); however, the UE only has eSIM data for Carrier A and Carrier C.

At step 306, the UE selects one of the available networks. For example, the UE may present a listing of network options to the user via a graphical user interface (GUI), the user selects the desired network. In this example, the user opts to change from its existing carrier (Carrier A) to Carrier C. Alternatively, selection logic may be employed within the user device (or even a remote entity within the network) which selects an appropriate carrier based on one or more selection rules, which may include for example: (i) cost considerations; (ii) equipment/compatibility considerations, and/or (iii) user preferences.

At step 308, the UE retrieves and loads the eSIM from the secure element the eSIM for the selected carrier. For instance, the UE deactivates the eSIM emulating the USIM for UMTS Carrier B, and e.g., contemporaneously or anticipatorily loads the eSIM corresponding to CDMA2000 Carrier C.

At step 310 (which may be performed contemporaneously or anticipatorily as noted), the UE authenticates to the selected network. The UE initiates the CDMA2000 modem, and registers with Carrier C.

The foregoing example illustrates several salient advantages of the present invention. Firstly, unlike physical SIM cards, the mobile device of the present invention stores multiple eSIMs within a eUICC. Accordingly, various aspects of the present invention can greatly improve device connectivity coverage. Since each eSIM is in the exemplary embodiment associated with a different network carrier, the subscriber has multiple home networks. The subscriber can operate in any of his home networks as a registered user (e.g., without incurring roaming charges, etc.). Moreover, the foregoing exemplary embodiment can support different radio access networks and associated eSIM types.

Secondly, since the mobile device of the present invention does not have physical SIM cards, the mobile device can support multiple radio access techniques without requiring the associated overhead associated with the card form factor (e.g., two or three or four separate SIM card slots). The mobile device does not need card receptacles, and the user does not need to carry multiple cards on their person, etc.

Furthermore, since swapping eSIMs can be assisted by GUI or automatically performed internally within the mobile device, various embodiments of the present invention help prevent user error. For example, a user will not accidentally leave SIM cards at home, or plug in the wrong SIM card, or plug in the SIM card incorrectly, etc.

A description of exemplary embodiments of generalized methods and apparatus for implementing one or more aspects of the invention is now presented.

### Methods -

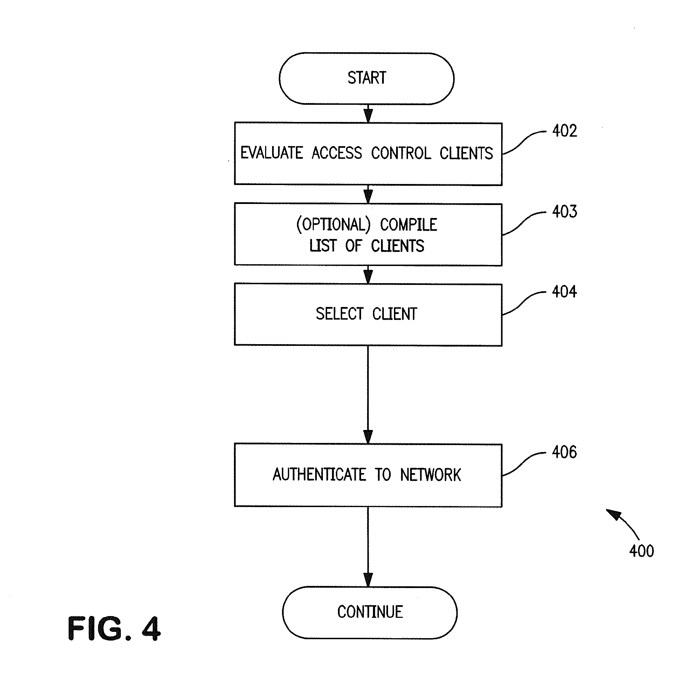

Referring now to FIG. 4, one embodiment of a generalized method for a device to migrate wireless service across multiple wireless networks is illustrated and described.

As used herein, the term "access control client" refers generally to a software client embodied in hardware or software and adapted to enable access to wireless networks and resources of a communications network. In one exemplary embodiment, an access control client is an eSIM executed on an eUICC. In one variant, the eSIM is configured for operation with at least one of: Universal Subscriber Identity Module (USIM), IP Multimedia Services Identity Module (ISIM), CDMA Subscriber Identity Module (CSIM).

At step 402, other access control client options are evaluated. In one exemplary embodiment, the process to evaluate access control clients is triggered automatically by the wireless device. For example, if a UE implements multiple wireless radio technology interfaces (e.g. GSM, CDMA), a user may experience reduced signal strength (or no signal at all) on its currently active radio. Responsively, the wireless device checks its available access control clients to avoid roaming.

In another embodiment, the process to update access control clients is triggered manually by the user. For example, a user may have varying voice and data plan rates between different network providers for which the user maintains service contracts. The user may want to manually elect to connect to a different network provider in order to obtain the most cost-effective rate for the desired wireless network service (e.g. voice and data). Alternatively, the user may wish to use different service providers in different personal contexts; e.g., one for personal use, and one for business use.

In another embodiment, the trigger to update access control clients may be driven by context specific usage (e.g. cost-effectiveness, signal strength) of the available networks. For example, a user may have eSIM data for multiple carriers on a UE, each eSIM with their own usage rates. One carrier may better offer evening rates prompting the UE to select the corresponding cost-effective network during the evening.

In one implementation, the trigger to update the access control client may be driven by time and/or geographic location constraints. For example, a user may have eSIM data for a personal account and a business account. A wireless device may determine that the device is located at the user's place of business during normal business hours and will therefore select the network associated with the eSIM data for the business account. Alternatively, if the device determined it was not business hours and/or not at a work location (e.g. primary residence), the device would select the network associated with the eSIM data for the personal account.

Moreover, various inputs (e.g., time and/or geographic context) can also be used predictively. For example, a user driving through areas which have historically presented very poor reception for a first carrier but not a second carrier, can automatically trigger an update to the access control client. In some embodiments, the historical analysis may be based on the device's own history (e.g., based on previous operation), or may be "crowd-sourced" i.e., based on history collected from a number of other devices (whether of similar type/capabilities as the device in use, different, or a heterogeneous mix of the foregoing). In some cases, this information may be downloaded to the device by the user (e.g., via an application software or update), or may be provided to the device by a network (whether automatically or otherwise).

Moreover, network carriers may prefer that the device preemptively change to a "better" carrier, rather than support the device with increasingly less efficient network resources, and/or adversely impact user experience. For instance, Carrier A may desire a seamless handover to Carrier B in a notoriously weak coverage area, since this seamless handover (albeit to another carrier) and continuity of service is preferable to spotty, interrupted service, which may reflect poorly on Carrier A. In certain cases, the user may not even be aware of the handover, and hence this would reflect positively on Carrier A even though they were not at that point providing service.

At optional step 403, a wireless device compiles a listing of available access control clients. In one embodiment, the listing is based on the currently stored access control clients. In one variant, the listing additionally includes externally stored access control clients. In other embodiments, the listing may include access control clients which have not been assigned yet, but are free for assignment. For example, in one variant, the listing may include access control clients that are advertised for sale and download.

As shown, per step 404, the wireless device selects an available access control client. In one exemplary embodiment, the selection of the available access control client is accomplished manually by the user. For example, the wireless device may present to the user a list of available access control client through a GUI.

In another embodiment, the selection of the access control client may be accomplished automatically by the wireless device scanning available networks in the user's area. In one variant, the selection of the access control client may be determined by a configurable setting on the wireless device (e.g. default network). For example, a mobile device that has multiple available network options may select the network offering the best signal quality, highest bandwidth, the least expensive billing rate, etc., or combinations/optimizations of multiple of the foregoing

In another exemplary embodiment, the wireless device may implement multiple radio-access technology interfaces (e.g. CDMA2000, GSM) allowing the device to select a network for each available interface. In one implementation, one wireless interface may select a network for voice services, while the other wireless interface may select a network for data services. Performance (e.g., bandwidth) or QoS or security may also be used as a basis of selection (i.e., one network for secure traffic, another for unsecure traffic.

Once the appropriate access control client has been selected, then the wireless device will retrieve the access control client data associated with the selected network. In one exemplary embodiment of the present invention, user access data (e.g., access control client, and associated other components, etc.) may be retrieved from the secure element of the wireless device.

In an alternate embodiment, the user access data associated with the selected network may be downloaded to the wireless device.

Thereafter, the access control client will be loaded into the wireless device. In one exemplary embodiment, the retrieved user access data (i.e., access control client, and associated other components, etc.) will be loaded into the wireless device software. In one implementation, the wireless device software will determine whether the wireless interface required to connect to the desired network is currently in use with another authenticated session.

If the wireless interface is not being used with another authenticated network session, the wireless device will initiate access control as described in step 406. If the wireless interface is in use, then in one embodiment, the wireless interface is reset by the wireless device software to allow connection to the desired network. After reset of the wireless interface, the wireless device will initiate access control as described in step 406. In other embodiments, the second wireless interface is initiated in parallel with the existing wireless connection to support simultaneous connection to the new home network and the previous visited network.

In some implementations of the invention, the wireless device may contain one or more wireless interfaces. In one variant, more than one of the wireless interfaces may be active at the same time, allowing simultaneous loading of user access data. For example, upon restart of a UE, user access data for a CDMA2000 wireless interface and a GSM wireless interface may be loaded concurrently. In another variant, the UE may switch from one wireless interface to another wireless interface.

At step 406, the wireless device initiates an access control procedure. If successful, the wireless device may obtain wireless network services from the selected network. In one embodiment, the access control procedure is a challenge-and-response protocol for mutually authenticating both the wireless device to the network, and the network to the wireless device. In one such embodiment, the access control procedure comprises the Authentication and Key Agreement (AKA) procedure (see FIG. 1 and associated description). In other embodiments, the access control procedure includes a unidirectional authentication; e.g., only the cellular device or cellular network is authenticated. Such embodiments include for example the Cellular Authentication and Voice Encryption (CAVE) based algorithms, although other algorithms may be used with equal success.

Various aspects of the present invention substantially improve both quality and efficiency of service, as well as service coverage. By allowing the storage of a plurality of user access data, users may maintain multiple service contracts for different network service providers on a single UE. Such a feature adds value to a user, as they may *inter alia* roam from their domestic service area (e.g., in the case of foreign travel) by purchasing user access data with a service provider in the foreign network service area. Additionally, because the user access data format is not restricted to particular physical card (e.g. UICC, R-UIM card, etc.), a UE enabled with multiple wireless interfaces (GSM, CDMA, etc.) may enhance service coverage by allowing a user to switch between different RANs with varying signal strength.

In one embodiment, the present invention takes into account the revenue or profit implications associated with allowing a user to purchase and receive to their access control client for a wireless network service provider through an application-based store (e.g., online store) or broker. For example, users have greater flexibility in obtaining wireless services without the need to acquire a new physical card with the requisite user access data. Additionally, providers of the user access data via the application-based store could charge a premium for temporary user access data (e.g., in the case of short-term foreign travel), but would still be less than a user would have to pay in roaming charges or international service rates with their domestic service provider.

### Exemplary Mobile Apparatus -

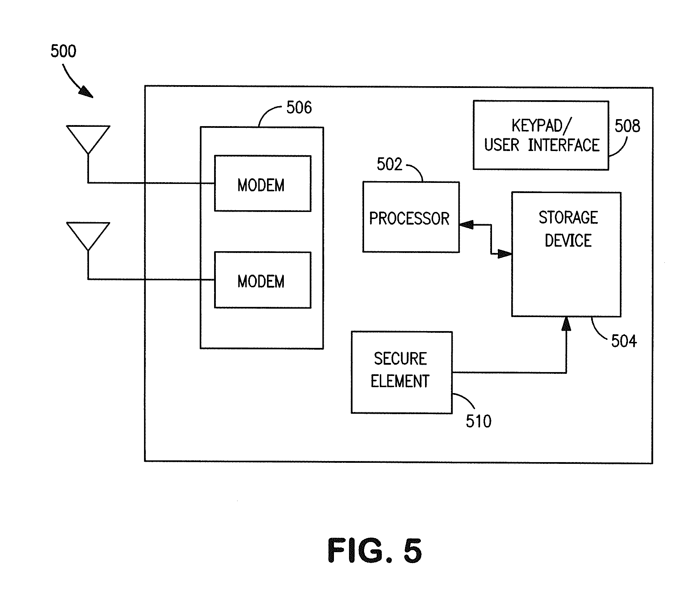

Referring now to FIG. 5, exemplary user or client mobile apparatus 500 useful for implementing the methods of the present invention is illustrated.

The exemplary UE apparatus of FIG. 5 is a wireless device with a processor subsystem 502 such as a digital signal processor, microprocessor, field-programmable gate array, or plurality of processing components mounted on one or more substrates. The processing subsystem may also comprise an internal cache memory. The processing subsystem is connected to a memory subsystem 504 comprising memory which may for example, comprise SRAM, flash and SDRAM components. The memory subsystem may implement one or a more of DMA type hardware, so as to facilitate data accesses as is well known in the art. The memory subsystem contains computer-executable instructions which are executable by the processor subsystem.

In one exemplary embodiment, the device can comprise of one or more wireless interfaces 506 adapted to connect to one or more wireless networks. The multiple wireless interfaces may support different radio technologies such as GSM, CDMA, UMTS, LTE/LTE-A, WiMAX, WLAN, Bluetooth, etc. by implementing the appropriate antenna and modem subsystems.

A user interface subsystem 508 includes any number of well-known I/O including, without limitation: a keypad, touch screen (e.g., multi-touch interface), LCD display, backlight, speaker, and/or microphone. However, it is recognized that in certain applications, one or more of these components may be obviated. For example, PCMCIA card-type client embodiments may lack a user interface (as they could piggyback onto the user interface of the host device to which they are physically and/or electrically coupled).

In the illustrated embodiment, the device includes of a secure element 510 which contains and operates the eUICC application. The eUICC is capable of storing and accessing a plurality of access control client to be used for authentication with a network operator. The secure element is accessible by the memory subsystem at the request of the processor subsystem. In one exemplary embodiment, the secure element includes at least a partitionable memory, wherein the partitionable memory is adapted to contain one or more access control clients and associated patches.

The secure element may also comprise a so-called "secure microprocessor" or SM of the type well known in the security arts. Moreover, in one embodiment, the secure element maintains a listing or manifest of stored access control clients. The manifest may include information as to the current status of the stored access control clients. Such information may include availability, completeness, validity, prior experienced errors, etc. The manifest may be further linked or coupled to the user interface if desired, so as to enable user selection of an available access control client.

Furthermore, various realizations of the exemplary embodiment include instructions which when executed, detect a roaming condition, and responsively evaluate other access control client options. In at least one variant, the foregoing roaming detection is automatic. Such detection may occur via geography/time (e.g., via GPS receiver, association with a known location or device (for example, bases station or WLAN AP), receipt of a "foreign" network communication (e.g., advertisement message, such as a WIMAX MOB_ADV message), etc.

In another variant, the detection of the roaming condition is triggered manually by the user. Moreover, in yet other embodiments, the device can be triggered to evaluate access control clients without roaming detection; for instance, triggered by user input, context specific operation (e.g., calling a number that has been classified by the user as "business" or "personal" or "international"), etc.

Yet other embodiments, of the exemplary embodiment include instructions for selecting and loading an access control client. For example, once a roaming condition is detected, the user device retrieves user access data (e.g., access control client, and associated other components, etc.) for loading into the device software.

In one implementation, the wireless device deactivates the current connection, and reestablishes a new connection to a new home network. In alternate implementations, the wireless device sustains both the current connection (which may be roaming), and establishes a new connection. For example, in some implementations of the present invention, the wireless device may contain one or more wireless interfaces. In one such variant, more than one of the wireless interfaces may be active at the same time allowing simultaneous loading of user access data. For instance, upon restart of a UE, user access data for a CDMA2000 wireless interface and a GSM wireless interface may be loaded concurrently.

It is appreciated that while the foregoing embodiment of the user device 500 is described primarily in the context of a mobile telephone (e.g., smartphone), the invention is in no way limited to telephony devices. For example, the foregoing techniques can be directly applied to data networks, such as e.g. a "4G" WiMAX or WLAN enabled device, such as a handheld or latop computer.

### Exemplary Network Apparatus -

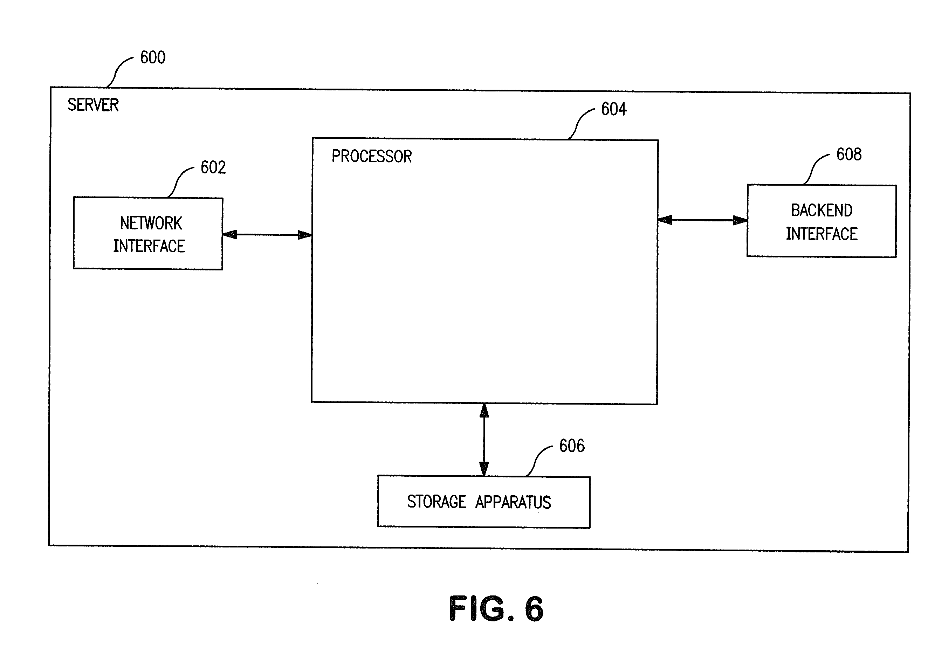

Referring now to FIG. 6, exemplary network apparatus 600 useful for implementing the methods of the present invention is illustrated.

The exemplary network apparatus of FIG. 6 is a server 600 generally comprises of a network interface 602 for interfacing with the communications network, a processor 604, a storage apparatus 606, and a backend interface 610. The backend interface 608 may comprise an interface for direct communication to UE 500, or may comprise an interface to the Internet whereby communication to the UE 500 may be facilitated. Additionally, the backend interface 608 may comprise of an interface for communication with cellular network systems. Other interfaces may also be utilized, the foregoing being merely illustrative.

It is appreciated that while the foregoing embodiments of the methods and apparatus of the invention are substantially user device (e.g., UE) centric, some or all of these functions can be offloaded onto network infrastructure. For example, in the embodiment described above which triggers automatically based upon detection of "roaming", the detection can be performed by (or signaled to) a network entity such as a server, which is cognizant of the user's account, device profile, and current/available access client(s). The network entity may also be in communication with a trusted access client (e.g., eSIM) provider or broker, so as to cause download of a new eSIM (or activation of one already resident on the user device) based on roaming detection or other criteria. For instance, upon detecting a user being handed off to or associating with a cell at the edge of a service provider's network, the entity could cause download and/or activation of a new eSIM for another network that extends beyond the coverage of the first. In this fashion, the user device can be "thinner" and not require any intrinsic logic or facility to make the eSIM switching decision.

The network entity may be associated with a service provider (e.g., as part of the "old home" or "new home" networks, or an affiliated or unaffiliated third party service (e.g., an Internet-based service which offers eSIM provision/management for clients as a service, without any affiliation with any particular service provider). The network entity may also be operated by the user device (e.g., smartphone) manufacturer, such as to provide service to purchasers. To this end, users may also download an "app" (application) for use on their device which facilitates communication with such network entities, and efficient selection of eSIMS when roaming.

The present invention also contemplates various business relationships between service providers and invocation of eSIM switching. For example, when Carrier X decides to switch over one of its current "home" users to an eSIM associated with Carrier Y, then Carrier X might report this event to Carrier Y, and due to a pre-existing relationship, obtain payment or some other type of consideration for causing the switch (as opposed to perhaps causing the switch to Carrier Z). In one such model, Carriers X and Y give each other intangible "credits" for the number of switches to their network caused by the other carrier per unit time (e.g., per month), and a payment made accordingly depending on which carrier caused more switches. Various other models will be recognized by those of ordinary skill given the present disclosure.

It will be recognized that while certain aspects of the invention are described in terms of a specific sequence of steps of a method, these descriptions are only illustrative of the broader methods of the invention, and may be modified as required by the particular application. Certain steps may be rendered unnecessary or optional under certain circumstances. Additionally, certain steps or functionality may be added to the disclosed embodiments, or the order of performance of two or more steps permuted. All such variations are considered to be encompassed within the invention disclosed and claimed herein.

While the above detailed description has shown, described, and pointed out novel features of the invention as applied to various embodiments, it will be understood that various omissions, substitutions, and changes in the form and details of the device or process illustrated may be made by those skilled in the art without departing from the invention. The foregoing description is of the best mode presently contemplated of carrying out the invention. This description is in no way meant to be limiting, but rather should be taken as illustrative of the general principles of the invention. The scope of the invention should be determined with reference to the claims.

## Claims

**1.** A wireless apparatus (500), comprising one or more wireless interfaces (506), the one or more wireless interfaces (506) adapted to connect to one or more wireless networks, and a processor (502), and **characterised by:**
a secure element (510), wherein the secure element (510) is adapted to store a plurality of user access data elements, each user access data element being associated with a corresponding network; and
a storage device (504) in data communication with the processor (502), the storage device (504) comprising computer-executable instructions that are configured to, when executed by the processor (502):
select an available network;
retrieve from the secure element (510) a first user access data element associated with the selected network;
load the retrieved user access data element; and
authenticate to the selected network with the loaded user access data element.

**2.** The wireless apparatus (500) of Claim 1, wherein:
the plurality of user access data elements comprises one or more electronic Subscriber Identity Modules (eSIMs), the secure element (510) comprises an electronic Universal Integrated Circuit Card (eUICC), and each of the one or more eSIMs is associated with an International Mobile Subscriber Identifier (IMSI);
the one or more wireless networks comprises a cellular network; and
the computer-executable instructions are further configured to, when executed by the processor (502):
request authentication to the cellular network; and
execute an Authentication and Key Agreement (AKA), based at least in part on the retrieved eSIM.

**3.** The wireless apparatus (500) of any preceding claim, wherein the one or more wireless networks comprises a Global Standard for Mobile Communications (GSM) network.

**4.** The wireless apparatus (500) of any preceding claim, wherein the one or more wireless networks comprises a Universal Mobile Telecommunications System (UMTS) network.

**5.** The wireless apparatus (500) of any preceding claim, wherein the one or more wireless networks comprises a Code Division Multiple Access 2000 (CDMA 2000) network.

**6.** The wireless apparatus (500) of any preceding claim, wherein the storage device (504) further comprises computer-executable instructions that are configured to, when executed by the processor (502), detect an available network via at least one of the one or more wireless interfaces (506).

**7.** The wireless apparatus (500) of any preceding claim, wherein the selection of an available network is triggered by a user input or preference.

**8.** The wireless apparatus (500) of any preceding claim, wherein the selection of an available network is automatically triggered by one or more contextual inputs selected from geographic data, time data, and signal reception data.

**9.** A method for migrating wireless access across two or more networks, the method comprising:
detecting a roaming condition; and
**characterised by:**
evaluating one or more access control clients, each access control client being associated with one or more networks;
selecting an available access control client;
loading the selected access control client; and
executing the selected access control client.

**11.** The method of Claim 9, further comprising detecting one or more available networks.

**12.** The method of Claim 9 or Claim 10, wherein the selecting of an available access control client is based on user input.

**13.** The method of any of Claims 9 to 12, wherein the selecting of an available access control client is based on one or more criteria.

**14.** The method of any of Claims 9 to 13, wherein one or more access control clients comprise two or more access control clients which are simultaneously active.

**15.** An apparatus for migrating wireless access across two or more networks, the apparatus comprising:
means for detecting a roaming condition; and
**characterised by:**
means for evaluating one or more access control clients, each access control client being associated with one or more networks;
means for selecting an available access control client;
means for loading the selected access control client; and
means for executing the selected access control client.
